# NEW EUROPEAN PATENT SPECIFICATION

(11) **EP 2 025 383 B2**
(45) Date of publication and mention of the opposition decision: **05.11.2014**
(45) Mention of the grant of the patent: 26.10.2011
(21) Application number: 07743489.2
(22) Date of filing: 16.05.2007
(51) Int. Cl.: B01D 33/00, B01D 29/25, B30B 9/14

(54) **Solid-liquid separating device**
Feststoff-Flüssigkeit-Trennvorrichtung
Dispositif de séparation solide-liquide

(30) Priority: 22.05.2006 JP 2006141826
(43) Date of publication of application: 18.02.2009
(73) Proprietor: Amukon Kabushiki Kaisha, Yokohama-shi, Kanagawa-ken 223-0057 (JP)
(72) Inventor: SASAKI, Masayoshi, Yokohama-shi, Kanagawa 224-0015 (JP)
(74) Representative: Hübner, Gerd
(86) International application number: PCT/JP2007/060054
(87) International publication number: WO 2007/135920

(56) References cited:
- EP-A1- 0 581 965
- JP-A- 09 220 599
- JP-A- 2001 224 913
- JP-A- 2005 -66 524
- JP-A- 2005 230 852
- JP-A- 2001- 212 696
- US-A1- 2002 043 505

## Description

### TECHNICAL FIELD

The present invention relates to a liquid solid separating apparatus which according to the preamble of claim 1 includes: a solid-liquid separating section having a plurality of mutually adjacent fixed plates and a plurality of movable plates disposed between the mutually adjacent fixed plates the fixed and movable plates defining filtrate discharge gaps between each other; and at least one screw extending so as to pass throughout the solid-liquid separating section, the movable plates being formed in such a manner that the movable plates are pushed and caused to move by the rotating screw, and while the object material to be processed which has been introduced into the solid-liquid separating section is moved toward an outlet of the solid-liquid separating section by the rotating screw, filtrate which is separated from the object material being expelled to the exterior of the solid-liquid separating apparatus via filtrate discharge gaps in the solid-liquid separating section and object material to be processing having a reduced liquid content ratio being expelled from the outlet to the exterior of the solid-liquid separating section.

### BACKGROUND

In the prior art, the use of a solid-liquid separating apparatus of the type described above is known in order to separate liquid from an object material to be processed which includes a liquid, for example, organic sludge such as waste tofu, waste water from food processing, waste water expelled from processed sewage or pig-breeding installations, or inorganic sludge such as cutting oil including cutting shards, waste plating solution, waste ink, waste pigment liquid, or waste coating liquid, or vegetable waste, fruit and vegetable peel, food residue, bean curd refuse, or the like, (see, for example, Japanese Patent Application Publication No. 2826991, Japanese Patent Application Publication No. 3565841 and Japanese Patent Application Publication No. 3638597). According to a solid-liquid separating apparatus of this type, it is possible to cause the movable plates to move actively with respect to fixed plates, and therefore even without providing a special driving apparatus to drive the movable plates, it is still possible to expel solid material which has entered into the filtrate discharge gaps formed between the movable plates and the fixed plates, in a highly efficient fashion, and hence to prevent blockages of the filtrate discharge gaps.

Therefore, in the solid-liquid separating apparatus of this kind, since the liquid content declines as the object material to be processed of the solid-liquid separating section moves toward the region on the outlet side, then the efficiency of liquid removal from the object material is markedly enhanced in the outlet side region and therefore it is necessary to expel the object material from the outlet of the solid-liquid separating section. Consequently, in the prior art, the lead angle of the screw section which is position in the outlet side region of the solid-liquid separating section is set to a value of approximately 8° to 9°, and by reducing the lead value of this screw section, the volume of the outlet side region of the solid-liquid separating section is narrowed, a large pressure is applied to the object material present in the outlet side region of the solid-liquid separating section, and hence the efficiency of liquid removal from the object material is increased. According types of solid-liquid separating apparatuses with like screw sections are disclosed in JP 2005 230 852 A or US2002/0043505 A1.

By composing the solid-liquid separating section as described above, although it certainly is possible to raise the efficiency of liquid removal from the object material to be processed, in other words, the efficiency of squeezing liquid out from the object material, but the results of the most recent investigation carried out by the present inventors make it clear that if the lead angle of the screw is made small, then there is marked wear of the movable plates which are pushed and moved by the rotational motion of the screw, and hence the lifespan of the movable plates is shortened.

### DISCLOSURE OF THE INVENTION

The present invention was devised on the basis of the aforementioned circumstances, an object thereof being to provide a solid-liquid separating apparatus which is able to suppress wear of the movable plates in comparison with the prior art, without reducing the efficiency of liquid removal from the object material.

In order to achieve the aforementioned object, the present invention according to the characterizing part of claim 1 proposes that in a solid-liquid separating apparatus of the type described at the start of this document, the diameter of the shaft section of a screw section on the outlet side of the solid-liquid separating section be made progressively larger toward the outlet side from a prescribed position on the screw which is disposed in the solid-liquid separating section, and the lead angle of at least one portion of the screw section is set to 13° to 14° throughout the whole length of the screw section.

Furtheron according to claim 1, the prescribed position on the screw is set to a position further downstream, in terms of the direction of movement of the object material to be processed, than the inlet where the object material is introduced into the solid-liquid separating section.

It is beneficial if the diameter of the shaft section of the screw section is made progressively greater toward the outlet side of the solid-liquid separating section throughout the whole length of the screw section.

The lead angle is set to 13° to 14° throughout the whole length of the screw section.

It is favorable if the fixed plates and the movable plates respectively have a ring shape and one screw extended through the fixed plates and the movable plates, the inner diameter of the movable plates being smaller than the outer diameter of the screw.

According to the present invention, it is possible to suppress the wear of the movable plates in comparison with the prior art, without reducing the efficiency of liquid removal from the object material.

### BRIEF DESCRIPTION OF THE DRAWINGS

Fig.1 is a cross-section front view diagram of a solid-liquid separating apparatus;
Fig.2 is an exploded perspective diagram of a solid-liquid separating apparatus showing adjacent fixed plates and a movable plate disposed between these fixed plates, and the like;
Fig.3 is a vertical cross-sectional view of a solid-liquid separating section;
Fig.4 is an illustrative diagram showing the state of arrangement of fixed plates, movable plates, spacers and stay bolts;
Fig.5 is a perspective diagram showing a composition relating to the coupling of an output shaft and the shaft section of the screw;
Fig.6 is a front view diagram showing an example in which spacers are fixed integrally to the fixed plate;
Fig.7 is a front view diagram showing a screw in a state where it has been removed from the solid-liquid separating section;
Fig.8 is a diagram illustrating the lead angle of the screw;
Fig.9 is a partial cross-sectional front view of a solid-liquid separating apparatus having a screw having a partially different structure to the screw shown in Fig.1;
Fig.10 is a partial cross-sectional front view of a solid-liquid separating apparatus comprising a conventional screw; and
Fig.11 is a diagram for describing the pressing of the movable plates against the fixed plates by means of the rotating screw.

### Explanation of reference numerals:

- 1: inlet member
- 2: outlet member
- 3: solid-liquid separating section
- 3A: inlet
- 3B: outlet
- 4: inflow port
- 5, 8, 10, 11: side wall
- 6: opening
- 7: bottom wall
- 9: motor supporting member
- 12: motor
- 13, 14: stay
- 15: axle bearing
- 18: bearing member
- 19,: 20 side wall
- 21: screw
- 21A: screw section
- 22, 23: opening
- 24: bolt
- 25: nut
- 26: discharge port
- 28: fixed plate
- 29: movable plate
- 32: installation hole
- 34: stay bolt
- 36, 36A: nut
- 38: spacer
- 39: ear section
- 40: filtrate receiving member
- 41: shaft section
- 42: vane section
- 45: output shaft
- 46: filtrate discharge pipe
- 47: back pressure plate
- 49: hollow section
- 50: engaging piece
- 51: engaging groove
- 52, 53: stay
- d: diameter
- S₁: prescribed position
- α: lead angle

### BEST MODE FOR CARRYING OUT THE INVENTION

Below, embodiments of the present invention are described with reference to the drawings, and in combination with this, the drawbacks of the prior art are clarified in more concrete terms by means of the drawings.

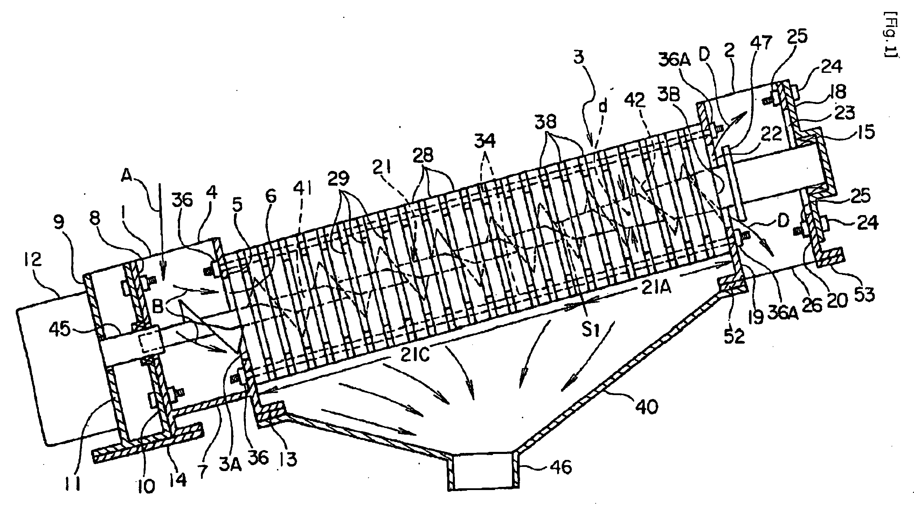

Fig.1 is a cross-sectional front view showing one example of a solid-liquid separating apparatus. By means of this solid-liquid separating apparatus, it is also possible to separate the solid portion and the liquid portion from various types of object materials to be processed including liquids other than water, such as oil, but here a case is described in which a sludge containing an excessive amount of water is subjected to water removal processing.

The solid-liquid separating apparatus shown in Fig.1 has an inlet member 1, an outlet member 2 and a solid-liquid separating section 3 which is disposed between them. The inlet member 1 is formed in a rectangular parallelepiped shape, the upper portion of which is open, and an inflow port 4 through which sludge flows in is constituted by this upper opening. Reference numeral 7 denotes the bottom wall of the inlet member 1. Furthermore, an opening 6 is formed in the side wall 5 of the inlet member 1 on the side which faces toward the solid-liquid separating section 3, and one side wall 10 of a motor supporting member 9 which has a rectangle-shaped lateral cross-section is fixed by a nut and bolt to the side wall 8 on the opposite side to the side wall 5. A motor 12 equipped with a reducing gear is fixed to another side wall 11 of the motor supporting member 9.

Both of the side walls 5 and 8 of the inlet member 1 extend downwards and the lower end portions thereof are fixed in a respectively detachable fashion to stays 13 and 14 of a supporting frame by means of bolts and nuts which are not illustrated. The respective side walls 10 and 11 of the motor supporting member 9 also extend downwards and the lower end portions thereof are fixed in a detachable fashion to a stay 14 of a supporting frame by means of bolts and nuts which are not illustrated.

The upper portion and the lower portion of the outlet member 2 are open, and the outlet member 2 is formed with a rectangle-shaped horizontal cross-section. Openings 22 and 23 are formed respectively in the side wall 19 of the outlet member on the side facing toward the solid-liquid separating section 3 and the side wall 20 on the opposite side to same. The side walls 19 and 20 extend downwards and the lower end portions thereof are fixed in a detachable fashion to stays 52 and 53 of the supporting frame by means of bolts and nuts which are not illustrated. Furthermore, a bearing member 18 is disposed in the opening 23 formed in the side wall 20. The bearing member 18 is fixed in a detachable fashion to the side wall 20 by a bolt 24 and a nut 25. The lower opening of the outlet member 2 constitutes a discharge port 26 through which the sludge that has been subjected to water removal processing is expelled.

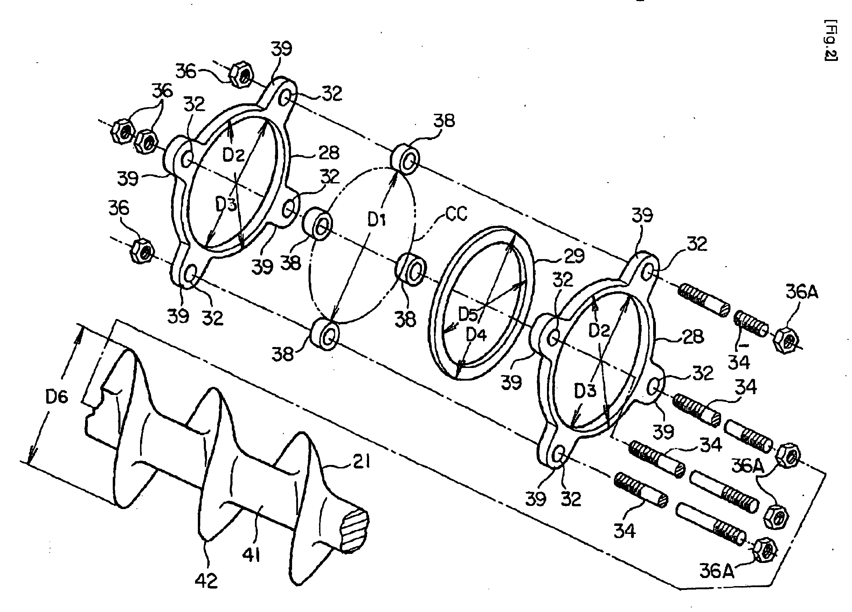

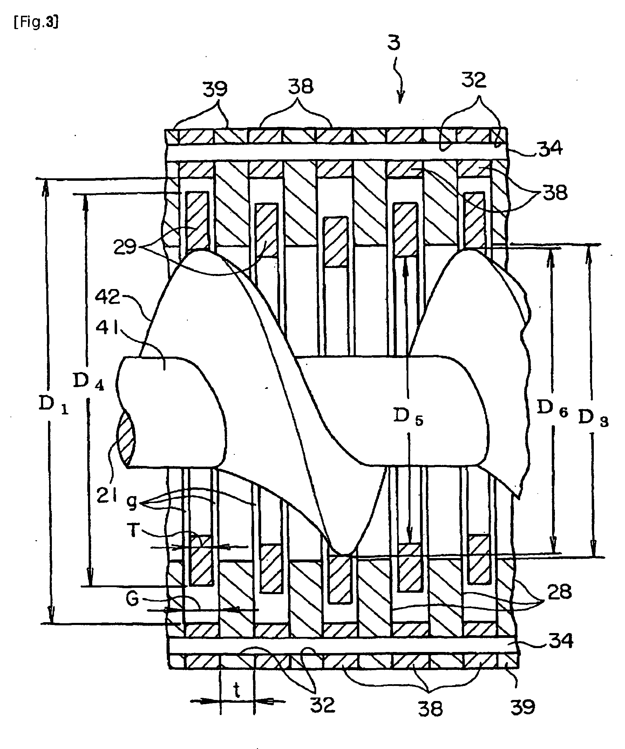

The solid-liquid separating section 3 according to the present example comprises: a plurality of ring-shaped fixed plates 28 which are disposed at mutually spaced intervals in the axial direction by means of a plurality of small ring-shaped spacers 38; and ring-shaped movable plates 29 which are disposed between the respective fixed plates 28. Fig.2 is an exploded perspective view showing the external appearance of the two fixed plates 28, the movable plate 29 which is disposed between these fixed plates 28, and plural spacers 38 which are positioned about the outer circumference of the movable plate. Fig.3 is a partial cross-sectional view of the solid-liquid separating section 3. The plurality of fixed plates 28 are disposed in a concentric fashion as shown in Fig.1 to Fig.3, and four spacers 38 are disposed respectively between the fixed plates 28. As shown in Fig.1, the solid-liquid separating section 3 according to the present example is disposed at a slight inclination in such a manner that the side of the outlet member 2 is higher. However, it is also possible for the solid-liquid separating section to be formed horizontally, and it is possible to conceive of cases where the solid-liquid separating section is inclined so as to be lower toward the outlet side, or where the solid-liquid separating section is disposed vertically in such a manner that the fixed plates 28 and the movable plates 29 are essentially horizontal. In summary, it is possible to set the inclination of the solid-liquid separating section appropriately provided that the direction of discharge of the sludge and the direction of discharge of the filtrate from the sludge are mutually different.

As shown in Fig.2 and Fig.3, four ear sections 39 which project in the radial direction of the fixed plate 28 and which are arranged in the circumferential direction of same are formed on each of the fixed plates 28. Installation holes 32 are formed respectively in each of the ear sections 39. Stay bolts 34 extend to pass respectively through the installation holes 32 formed in the respective ear sections 39 and the central holes of the respective spacers 38 which are disposed between the fixed plates 28. Furthermore, as shown in Fig.1, each of the stay bolts 34 passes through the side wall 5 of the inlet member 1 and the side wall 19 of the outlet member 2, and nuts 36 and 36A are respectively fastened by screwing onto a screw thread formed on the respective end portions of the stay bolts 34. In Fig. 1, in order to make the illustration easy to understand, a portion of the stay bolts and the spacers, and the like, are not depicted.

As described above, the plurality of fixed plates 28 are fixed and coupled in an integrated fashion and are fixed to the inlet member 1 and the outlet member 2, by means of the plurality of stay bolts 34 and the nuts 36 and 36A. The stay bolts 34 extend so as to pass through the plurality of fixed plates 28, and serve to couple together the plurality of fixed plates 28. It is also possible to adopt an assembly in which the respective fixed plates disposed at mutually spaced intervals by means of the spacers are able to perform a slight sliding movement.

As shown in Fig.3, the thickness T of the respective movable plates 29 which are disposed respectively between the fixed plates 28 is set to be smaller than the width of the gap G between the fixed plates. The thickness T of the movable plates 29 is set for example to 1 mm to 2 mm, and the gap width G is set for example to 2 mm to 3 mm. A very small gap g of approximately 0.1 mm to 1 mm, for example, is formed between the end face of each fixed plate 28 and the end face of the movable plate 29 opposing it. This very small gap g constitutes a filtrate discharge section through which the water separated from the sludge, in other words, the filtrate, can pass, as described hereinafter. Moreover, the thickness t of the fixed plates 28 is set to approximately 1.5 mm to 3 mm, for example. The gap g, the thicknesses T and t, and the gap width G are set approximately in consideration of the type of object material, and the like.

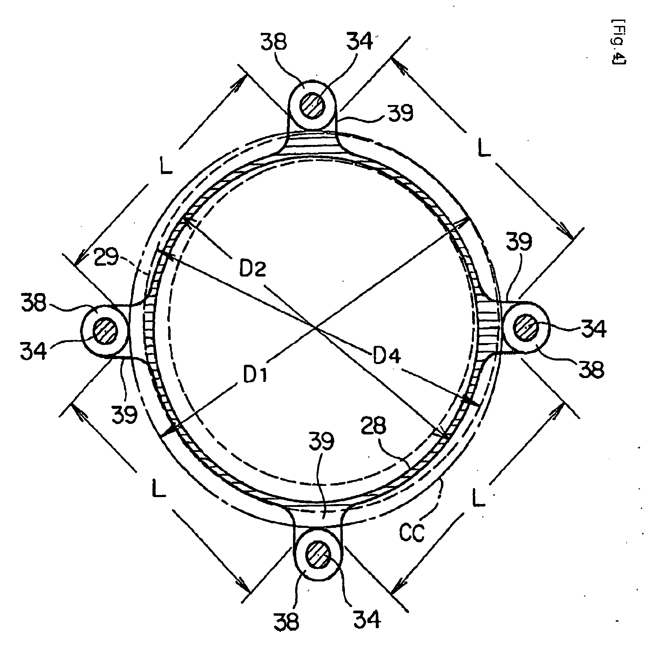

Fig.4 is a conceptual diagram for describing the state of arrangement of the fixed plates 28, the movable plates 29, the spacers 38 which are disposed between the fixed plates 28, and the stay bolts 34. In this diagram, the movable plates 29 are indicated by dotted lines. Here, taking the interval between two spacers 38 which are mutually adjacent in the circumferential direction of the fixed plates 28 to be L, the interval L is smaller than the outer diameter D₄ of the movable plates 29 (L < D₄) Therefore, the movable plates 29 are prevented from moving out from between the fixed plates 28.

Furthermore, as shown in Fig.2 as well, if an imaginary circle CC is traced to contact the four spacers 38 at the point thereof nearest to the center of the fixed plate, then the outer diameter D₄ of the movable plates 29 is smaller than the diameter D₁ of the circle CC and furthermore, the outer diameter D₄ of the movable plates 29 is set to be greater than the internal diameter D₃ of the fixed plates 28 (namely, D₁ > D₄; D₄ > D₃). By this means, each of the movable plates 29 is held movably in the radial direction and rotatably between the fixed plates 28, without becoming detached from the central holes of the fixed plates 28.

Moreover, in the present example, as shown in Fig.4, the outer diameter D₂ of the fixed plates 28 is set to be smaller than the diameter D₁ of the circle CC described above (D₁ > D₂). In Fig.4, the portions of the plates 28 and 29 which are mutually overlapping when the fixed plates 28 and the movable plates 29 are viewed in the direction perpendicular to the plane of the drawing-sheet, are marked with hatching. The fixed plates 28 according to the present example have plural ear sections 39, and the outer diameter D₂ of these fixed plates 28 is taken to be the outer diameter of the circular ring portion excluding these ear sections 39.

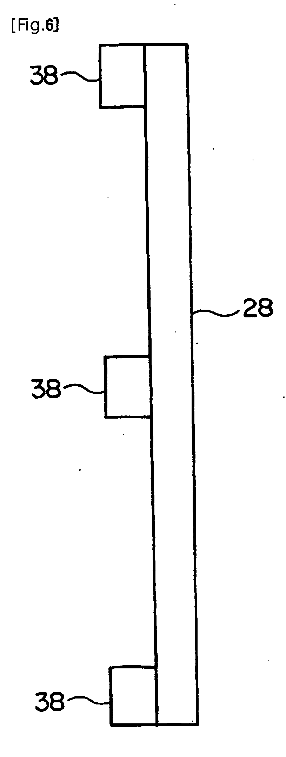

As described above, in the present example, the solid-liquid separating section 3 is constituted by a plurality of fixed plates 28 which are spaced apart at intervals in the axial direction by means of spacers 38 and which are fixed to each other by means of stay bolts 34, and movable plates 29 which are disposed between the mutually adjacent fixed plates 28. As shown in Fig.6, the spacers 38 can be formed in an integrated fashion with one of the two fixed plates which are adjacent to the spacers 38, and thus constituted as one component. For example, if the fixed plates 28 and the spacers 38 are both made of metal, then these members can be unified by welding, or they can be formed in an integrated fashion by casting. Alternatively, it is also possible to manufacture fixed plates 28 which are integrated with spacers 38 by cutting and processing a raw material. Moreover, if the fixed plate 28 and the spacers 38 are both made of resin, then it is possible to manufacture same as a unified molded component by using a mold.

Furthermore, as shown in Fig.1 to Fig.3, a screw 21 which extends in the axial direction of the solid-liquid separating section 3 is disposed inside the solid-liquid separating section 3 which comprises the plurality of fixed plates 28 and the plurality of movable plates 29. In particular, as shown in Fig.2 and Fig.3, this screw 21 comprises a shaft section 41 and a spiral-shaped vane section 42 which is formed in an integrated fashion with the shaft section 41. As shown in Fig.1, the screw 21 extends so as to pass through the side wall 5 of the inlet member 1 and the openings 6, 22, 23 formed in the side walls 19, 20 of the outlet member 2, and one end portion of the shaft section 41 of the screw 21 is supported rotatably via an axle bearing 15 on a bearing member 18.

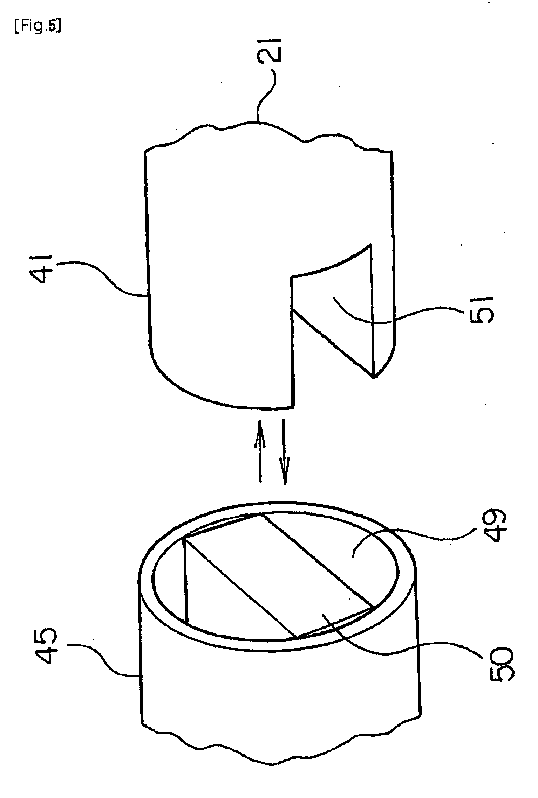

On the other hand, the output shaft 45 of the motor 12 shown in Fig.1 extends so as to pass through the side walls 11, 10 of the motor supporting member 9 and the side wall 8 of the inlet member 1, and is supported rotatably via an axle bearing on the side wall 10. As shown in Fig.5, the tip portion of the output shaft 45 is formed in a hollow fashion, and an engaging piece 50 is fixed to the center of this hollow section 49. An engaging groove 51 is formed on the other end portion of the shaft section 41 of the screw 21, and as shown in Fig.1, this end portion is inserted into the hollow section 49 of the output shaft 45, and the engaging groove 51 formed on the shaft section 41 engages with the engaging piece 50 on the output shaft 45. When the motor 12 is driven and the output shaft 45 rotates, this rotational movement is transmitted to the screw 21 via the engaging piece 50 and the engaging groove 51 which are mutually engaged, and the screw 21 duly turns about its central axis.

As described above, the solid-liquid separating apparatus according to the present example has one screw 21 which extends so as to pass through the solid-liquid separating section 3, but as described hereinafter, it is also possible to apply the present invention to a solid-liquid separating apparatus which has a plurality of screws provided in parallel with each other. In other words, the solid-liquid separating apparatus has at least one screw which extends so as to pass through the solid-liquid separating section.

Next, an example of the basic operation of the solid-liquid separating apparatus according to the present example will be described.
Sludge inside a service tank (not illustrated) which is located below the solid-liquid separating section 3, for example, is supplied to a flocking apparatus (not illustrated), and in this flocking apparatus, an aggregating agent is mixed and agitated together with the sludge which contains a large amount of water, thereby causing the sludge to flock. The flocked sludge (not illustrated) flows into the inlet member 1 of the solid-liquid separating apparatus as indicated by arrow A in Fig.1. The water content ratio of this sludge is approximately 99 wt%, for instance. In this case, since the screw 21 is driven in rotation by the motor 12, then the sludge input to the inlet member 1 passes through the opening 6 formed in the side wall 5 of the inlet member 1, as indicated by arrow B, and flows into the internal space between the fixed plates 28 and the movable plates 29, in other words, the internal space of the solid-liquid separating section 3, via the inlet 3A which is disposed at one end in the axial direction.

The sludge which has entered inside the solid-liquid separating section 3 is conveyed toward the outlet 3B of the solid-liquid separating section 3 by the screw 21 which is driven in rotation by the motor 12. In this case, the water content, in other words, the filtrate, which has been separated from the sludge is expelled to the exterior of the solid-liquid separating section by passing through the filtrate discharge gaps which are the respective small gaps g (Fig.3) between the fixed plates 28 and the movable plates 29. The filtrate expelled in this way is received by a filtrate receiving member 40 which is fixed to stays 13 and 52, and then flows out via the filtrate discharge pipe 46. Since this filtrate still contains some amount of solid material, the filtrate is subjected to further water treatment together with the other sludge, and is then supplied to the solid-liquid separating apparatus and subjected to water removal processing.

Here, as shown in Fig.3, the outer diameter D₆ of the vane portion of the screw 21 is set to be slightly smaller than the internal diameter D₃ of the fixed plate 28 (D₃ > D₆) so as not to interfere with the rotational movement. On the other hand, the outer diameter D₆ of the screw 21 is set to be larger than the inner diameter D₅ of the movable plate 29 (D₆ > D₅). Therefore, with the rotation of the screw 21, the respective movable plates 29 are pressed in the radial direction due to the impact of the tips of the vane sections of the screw 21 and are thus moved actively with respect to the fixed plates 28. In this way, it is possible actively to expel the solid material which has entered into the small gaps g and hence to raise the cleaning efficiency of the gaps g, without providing a special drive device for driving the movable plates 29.

By pressing and moving the movable plates 29 by the rotation of the screw 21, the water content of sludge inside the solid-liquid separating section 3 declines. The sludge having reduced water content is expelled from the outlet 3B of the solid-liquid separating section 3 as indicated by arrow D in Fig.1. A back pressure plate 47 is provided inside the range of the outlet member 2 which is slightly separated from the outlet 3B. The sludge which is expelled from the outlet 3B strikes the back pressure plate 47 and hence the amount of sludge expelled from the outlet 3B is restricted. By this means, the pressure inside the solid-liquid separating section is raised, and the efficiency of water removal from the sludge is further enhanced. In the example illustrated, the back pressure plate 47 is fixed to the shaft section 41 of the screw 21 by means of a bolt, which is not illustrated, in such a manner that it can be shifted in position. The sludge which has been expelled from the solid-liquid separating section 3 drops down through the discharge port 26 in the lower portion. The water content of the sludge after water removal treatment of this kind is approximately 80 to 85 wt%, for instance.

As described above, the solid-liquid separating apparatus has a composition whereby an object material to be processed which has entered into the solid-liquid separating section of the apparatus is moved toward the outlet of the solid-liquid separating section by means of the rotation of a screw, while filtrate that has been separated from the object material is expelled to the exterior of the solid-liquid separating section via filtrate discharge gaps of the solid-liquid separating section, and the object material having reduced liquid content ratio is expelled to the exterior of the solid-liquid separating section via the outlet of the solid-liquid separating section.

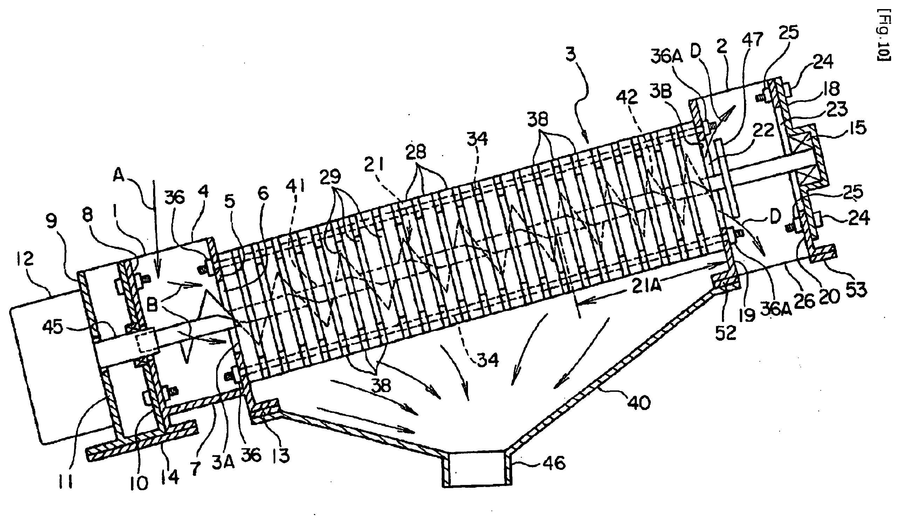

In the solid-liquid separating apparatus described above, as described previously as well, the water content in the sludge which is conveyed through the region on the outlet 3B side of the solid-liquid separating section 3 has already been reduced, and therefore the efficiency of water removal from the sludge present in this region must be further enhanced and the water content of the sludge expelled from the outlet 3B must be sufficiently reduced. Therefore, in a conventional solid-liquid separating apparatus, as shown in Fig.10, the lead angle of the screw section 21A which is situated to the outlet 3B side of the solid-liquid separating section 3 is set to a small value of some 8° to 9°, and this causes a reduction in the volume of the region inside the solid-liquid separating section 3 where the screw section 21A is present and therefore a high pressure is applied to the sludge conveyed through this region and the efficiency of water removal from the sludge is raised. However, if the lead angle of the screw is made small in this manner, then the wear of the inner circumferential surface of the movable plates 29 which are pressed and moved by the screw 21 becomes marked, and hence the problem of reduced lifespan is not overcome. The reasons for this can be considered to be the following.

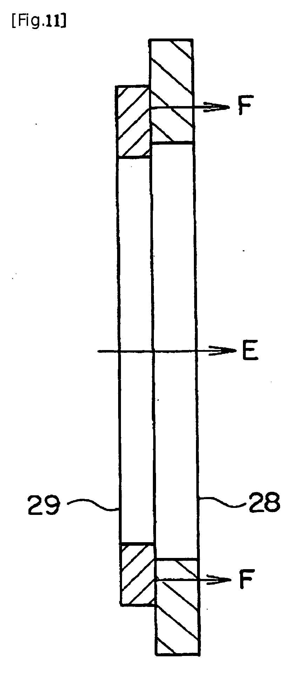

Fig.11 is an illustrative diagram showing one fixed plate 28 and one movable plate 29 which is positioned to the upstream side of the fixed plate 28. Due to the rotating screw, the sludge is conveyed in the direction of the arrow E. Here, when the screw 21 (not illustrated in Fig.11) rotates, the movable plate 29 receives an external force in the radial direction of the movable plate 29 from the screw 21, and also receives an external force in the direction of movement E of the sludge. For this reason, the movable plate 29 is pressed against the fixed plate 28 with the force indicated by F as shown in Fig.11. In this case, if the lead angle of the screw 21 is small, then the force in the direction of movement of the sludge which is received by the movable plate 29 from the rotating screw 21 becomes large, and the movable plate 29 is pressed with a large force F against the neighboring fixed plate 28. Since the movable plate 29 is pressed and caused to move in the radial direction of the movable plate 29 in a state where the movable plate 29 is pressed against the fixed plate 28 by a large force F in this way, then the abrasive force acting on the movable plate 29 is large. Consequently, the force that is required in order to press and move the movable plates 29 in the radial direction by means of the rotating screw 21 becomes large, and the edge portions of the vane section 42 of the screw 21 are rubbed with great force against the inner circumferential surface of the movable plate 29. In this way, in a conventional solid-liquid separating apparatus, wear of the inner circumferential surface of the movable plates 29 is promoted and the lifespan of the movable plate 29 becomes shorter. Furthermore, the inner circumferential surface of the movable plate 29 is cut away by the screw 21 and a fine comb-shaped cutting pattern is produced.

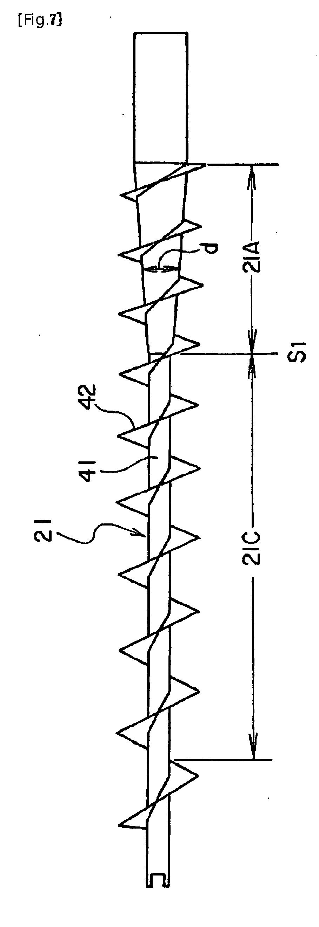

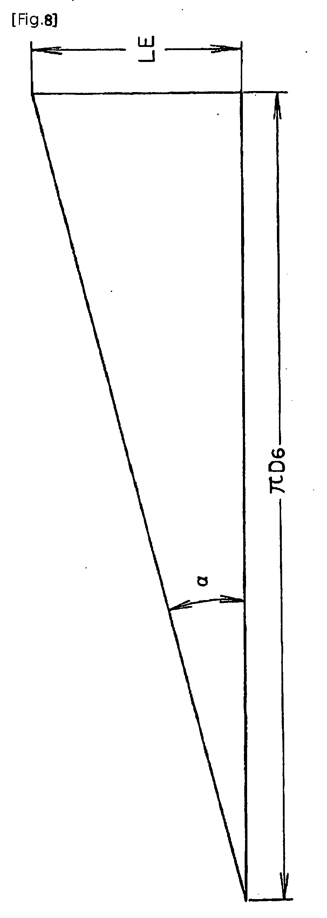

In order to resolve the drawbacks of the prior art described above, in the solid-liquid separating apparatus according to the present example, as shown in Fig.1 and Fig.7, the diameter d of the shaft section 41 of the screw section 21A on the side of the outlet 3B of the solid-liquid separating section 3 is made to become progressively larger toward the outlet 3B, from a prescribed position S₁ on the screw 21 which is disposed in the solid-liquid separating section 3. In this case, the lead angle of the screw section 21A is set to 13° to 14°. Fig.8 is a diagram showing the lead angle of the screw 21, in which D₆ indicates the outer diameter of the screw, πD₆ indicates the circumferential length of the outer circumferential portion of the screw 21, LE indicates the lead, and α indicates the lead angle. In the example illustrated, the lead angle of the screw section 21A is uniform through the whole length of the screw section 21A, and the lead angle is varied within the range of 13° to 14°.

Since the lead angle α of the screw section 21A is set to be large in comparison with the prior art, as described above, then as shown in Fig.11, the force F with which the movable plate 29 is pressed against the fixed plate 28 by the rotating screw 21 is smaller than in the prior art. Therefore, it is possible to push and move the movable plate 29 in the radial direction by means of the screw 21 with a smaller force than in the prior art, and consequently, it is possible to restrict the amount of wear of the inner circumferential surface of the movable plate 29 and also to prevent cutting away of this inner circumferential surface.

By making the lead angle α of the screw section 21A greater, the volume of the free region of the screw section 21A of the solid-liquid separating section 3 is increased in comparison with the prior art, without changing the diameter of the shaft section, and the efficiency of water removal from the sludge declines. In the solid-liquid separating apparatus according to the present example, firstly, the fact that the volume of the free region of the screw section 21A and the solid-liquid separating section 3 is reduced by increasing the diameter d of the shaft section 41 of the screw section 21A progressively toward to the outlet 3B means that the efficiency of water removal from the sludge is equivalent to or greater than the prior art. Moreover, since the diameter d of the shaft section 41 of the screw section 21A becomes greater toward the outlet 3B as the water content ratio of the sludge in the solid-liquid separating section 3 declines toward the outlet 3B, then the efficiency of water removal from the sludge inside the solid-liquid separating section 3 increases progressively toward the outlet 3B and the water content can be separated efficiently from the sludge.

As described above, in the solid-liquid separating apparatus according to the present example, wear of the inner circumferential surface of the movable plates 29 is suppressed and cutting away of the inner circumferential surface is prevented by making the lead angle α of the screw section 21A greater than in the prior art, and furthermore, the water removal efficiency is kept to a high level by making the diameter d of the shaft section 41 of the screw section 21A become progressively larger toward the outlet 3B side of the solid-liquid separating section 3.

If the lead angle α is made smaller than 10°, as described above, there is marked wear of the inner circumferential surfaces of the movable plates 29, and cutting away of these inner circumferential surfaces occurs, whereas if, conversely, the lead angle α is greater than 30°, then the efficiency of water removal from the sludge declines significantly. By setting the lead angle α to 13° to 14° as well as making the diameter d of the shaft section 41 of the screw 21 greater as described above, the lifespan of the movable plates 29 can be extended and sustained high efficiency of water removal from the sludge can be ensured. Furthermore, if the pressure applied to the sludge present in the region of the outlet of the solid-liquid separating section 3 becomes too large, then a problem occurs in that the amount of solid expelled via the very small gaps g increases, and therefore this point must also be taken into consideration when setting the lead angle α of the screw section 21A and the magnitude of the diameter d of the screw section 21A.

In the example shown in Fig.1, the prescribed position S₁ of the screw is set to a position on the downstream side, in terms of the direction of movement of the object material to be processed, from the inlet 3A where the object material to be processed is input to the solid-liquid separating section 3, and the diameter d of the shaft section 41 of the screw section 21A on the outlet 3B side of the solid-liquid separating section 3 is set to become progressively larger toward the outlet 3B form this prescribed position S₁, but the prescribed position S₁ on the screw may also be a position corresponding to the inlet 3A of the solid-liquid separating section 3. In this case, the diameter of the shaft section 41 of the screw section on the outlet 3B side is formed to become progressively larger toward the outlet 3B, from the position on the screw which corresponds to the inlet 3A.

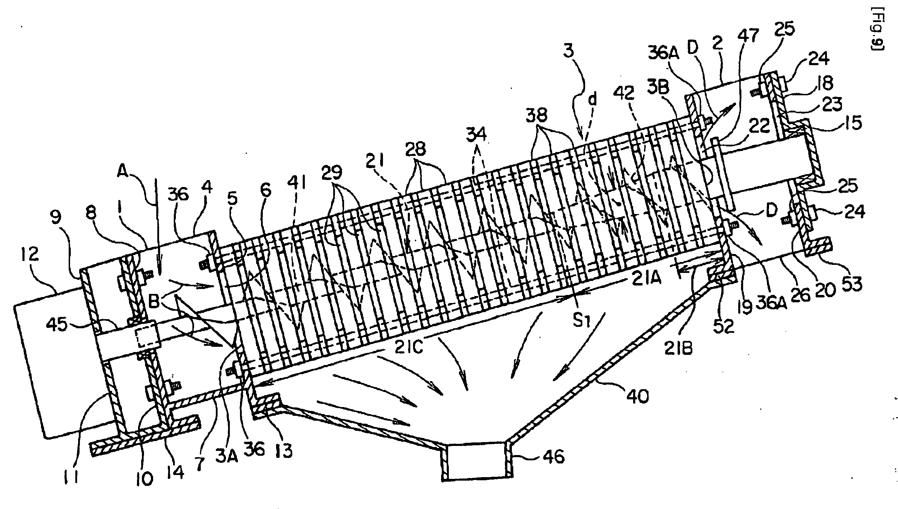

Furthermore, in the example shown in Fig.1 and Fig.7, the diameter d of the shaft section 41 of the screw section 21A progressively becomes larger toward the outlet 3B side of the solid-liquid separating section 3, throughout the whole length of the screw section 21A, but it is also possible to form the diameter d of one portion of the shaft section of the screw section 21A to become progressively larger toward the outlet 3B. For example, as shown in Fig.9, it is also possible to set the diameter of the shaft section of the screw section 21A in the portion 21B which is in the vicinity of the outlet 3B to a uniform size.

Furthermore, from the screw section 21A shown in Fig.1, Fig.7 and Fig.9, the diameter and the lead angle of the shaft section 41 of the portion 21C of the screw 21 on the inlet 3A side of the solid-liquid separating section can be set to suitable values which are respectively equal to or less than the diameter of the shaft section at the prescribed position S₁ and equal to or greater than the lead angle at the prescribed position S₁. In the example illustrated, the diameter of the shaft section 41 of the portion 21C of the screw 21 is set to be equal to the diameter of the shaft section 41 at the prescribed position S₁, and furthermore, the lead angle of the portion 21C of the screw 21 is set to be greater than the lead angle α of the screw section 21A, in addition to which the lead angle of the portion 21B is made progressively smaller toward the outlet 3B side of the solid-liquid separating section 3.

The foregoing described an example in which the present invention is applied to a solid-liquid separating apparatus in which only one screw 21 is provided, but the present invention can also be applied without any impediment to a solid-liquid separating apparatus which comprises a plurality of screws extending through a solid-liquid separating section having a plurality of fixed plates and movable plates which are disposed between mutually adjacent fixed plates, as described in Patent Publication No. 3565841 and Patent Publication No. 3638597. Furthermore, it is of course also possible to apply the present invention to a solid-liquid separating apparatus which uses a screw having a plurality of vane sections or to a solid-liquid separating apparatus in which a plurality of movable plates are disposed between mutually adjacent fixed plates, or the like. Moreover, if using movable plates and fixed plates having a recess section which is open on the upper side as in the solid-liquid separating apparatus described in Japanese Patent Application Publication No. 3638597, it is also possible to supply the object material to the solid-liquid separating section from the upper side of the movable plates and the fixed plates. In this case, the inlet of the solid-liquid separating section is positioned above the fixed plates and the movable plates.

## Claims

1. A solid-liquid separating apparatus comprising: a solid-liquid separating section (3) having a plurality of mutually adjacent fixed plates (28) and a plurality of movable plates (29) disposed between the mutually adjacent fixed plates, the fixed and movable plates (29) defining filtrate discharge gaps between each other; and at least one screw (21) which extends so as to pass through the solid-liquid separating section (3), the movable plates (29) being formed in such a manner that the movable plates (29) are pressed and caused to move by the screw (21), which rotates, object material to be processed which has been introduced into the solid-liquid separating section (3) being moved toward an outlet (3B) of the solid-liquid separating section (3) by the rotating screw (21), while filtrate which is separated from the object material being expelled to the exterior of the solid-liquid separating section (3) by passing through the filtrate discharge gaps in the solid-liquid separating section (3), and the object material having reduced liquid content ratio being expelled from the outlet (3B) to the exterior of the solid-liquid separating section (3),
**characterized in that**
the diameter (d) of a shaft section (41) of a screw section (21A) on the outlet (3B) side of the solid-liquid separating section (3) increases progressively toward the outlet (3B) side from a prescribed position (S₁) on the screw (21) which is disposed in the solid-liquid separating section (3) wherein the prescribed position (S₁) on the screw (21) is a position further downstream, in terms of the direction of movement of the object material, than the inlet (3A) where the object material is introduced into the solid-liquid separating section (3) and
the lead angle (α) of the screw section (21A) is set to 13° to 14° throughout the whole length of the screw section (21A).

2. The solid-liquid separating apparatus according to claim 1, wherein the fixed plates (28) and the movable plates (29) respectively have a ring shape, one screw (21) extends through the fixed plates (28) and the movable plates (29), and the internal diameter of the movable plates is smaller than the outer diameter of the screw.

## Patentansprüche

1. Feststoff-Flüssigkeit-Trennvorrichtung, mit: einem Feststoff-Flüssigkeit-Trennbereich (3) der eine Mehrzahl von aneinander angrenzenden fixierten Platten (28) und eine Mehrzahl von beweglichen Platten (29) aufweist, die zwischen den angrenzenden fixierten Platten angeordnet sind, wobei die fixierten (28) und beweglichen Platten (29) Filtrat-Austragslücken zwischen sich bilden; und wenigstens einer Schnecke (21), welche sich so erstreckt, dass sie durch den Feststoff-Flüssigkeit-Trennbereich (3) hindurch verläuft, wobei die beweglichen Platten (29) in der Weise gebildet sind, dass die beweglichen Platten (29) durch die sich drehende Schnecke (21) gedrückt und in Bewegung versetzt werden, wobei ein zu verarbeitendes Objektmaterial, das in den Feststoff-Flüssigkeit-Trennbereich (3) eingeführt worden ist, durch die drehende Schnecke (21) in Richtung eines Auslasses (3B) des Feststoff-Flüssigkeit-Trennbereichs (3) bewegt wird, während das Filtrat, welches von dem Objektmaterial getrennt wird, von dem Feststoff-Flüssigkeit-Trennbereich (3) nach außen ausgestoßen wird, in dem dieses durch die Filtrat-Austragslücken in dem Feststoff-Flüssigkeit-Trennbereich (3) hindurch gelangt, und das Objektmaterial mit reduziertem Flüssigkeitsgehalt-Verhältnis aus dem Auslass (3B) zur Außenseite des Feststoff-Flüssigkeit-Trennbereichs (3) ausgestoßen wird, **dadurch gekennzeichnet, dass**
der Durchmesser (d) eines Wellenabschnitts (41) eines Schneckenabschnitts (21A) auf der Seite des Auslasses (3B) des Feststoff-Flüssigkeit-Trennbereichs (3) in Richtung der Seite des Auslasses (3B) von einer vorbestimmten Position (S₁) auf der Schnecke (21), die in dem Feststoff-Flüssigkeit-Trennbereich (3) angeordnet ist, in Richtung der Seite des Auslasses (3B) progressiv zunimmt, wobei die vorbestimmte Position (S₁) auf der Schnecke (21) in Bezug auf die Bewegungsrichtung des Objektmaterials eine Position weiter stromabwärts als der Einlass (3A) ist, an welchem das Objektmaterial in den Feststoff-Flüssigkeit-Trennbereich (3) eingeführt wird, und
der Steigungswinkel (α) des Schneckenabschnitts (21A) über die gesamte Länge des Schneckenabschnitts (21A) auf 13° bis 14° eingestellt ist.

2. Feststoff-Flüssigkeit-Trennvorrichtung nach Anspruch 1, in welchem die fixierten Platten (28) und die beweglichen Platten (29) jeweils eine Ringform haben, sich eine Schnecke (21) durch die fixierten Platten (28) und die beweglichen Platten (29) hindurch erstreckt und der Innendurchmesser der beweglichen Platten kleiner ist als der Außendurchmesser der Schnecke.

## Revendications

1. Appareil de séparation solide-liquide comprenant : une section (3) de séparation solide-liquide comprenant une pluralité de plaques fixes (28) mutuellement adjacentes et une pluralité de plaques mobiles (29) disposées entre les plaques fixes mutuellement adjacentes, les plaques fixes (28) et mobiles (29) définissant des espaces de décharge de filtrat entre elles ; et au moins une vis (21) qui s'étend de sorte à passer à travers la section (3) de séparation solide-liquide, les plaques mobiles (29) étant formées de façon à ce qu'elles soient pressées et amenées à se déplacer par la vis (21) qui tourne, un matériau objet à traiter qui a été introduit dans la section (3) de séparation solide-liquide étant déplacé vers un orifice de sortie (3B) de la section (3) de séparation solide-liquide par la vis (21) rotative, tandis que le filtrat qui est séparé du matériau objet est expulsé à l'extérieur de la section (3) de séparation solide-liquide en passant à travers les espaces de décharge de filtrat dans la section (3) de séparation solide-liquide, et le matériau objet présentant un rapport de teneur en liquide réduit étant expulsé de l'orifice de sortie (3B) vers l'extérieur de la section (3) de séparation solide-liquide,
**caractérisé en ce que**
le diamètre (d) d'une section d'arbre (41) d'une section de vis (21A) côté orifice de sortie (3B) de la section (3) de séparation solide-liquide augmente progressivement côté orifice sortie (3B) à partir d'une position prescrite (S₁) sur la vis (21) qui est disposée dans la section (3) de séparation solide-liquide où la position prescrite (S₁) sur la vis (21) est une position qui se trouve plus en aval, en termes de la direction de mouvement du matériau objet, que l'orifice d'entrée (3A) d'où le matériau objet est introduit dans la section (3) de séparation solide-liquide, et
l'angle de filet (α) de la section de vis (21A) est réglé à 13° à 14° sur toute la longueur de la section de vis (21A).

2. Appareil de séparation solide-liquide selon la revendication 1, dans lequel les plaques fixes (28) et les plaques mobiles (29) présentent respectivement une forme annulaire, une vis (21) s'étend à travers les plaques fixes (28) et les plaques mobiles (29), et le diamètre interne des plaques mobiles est inférieur au diamètre externe de la vis.
